# EUROPÄISCHE PATENTSCHRIFT

(11) **EP 1 025 970 B1**
(45) Veröffentlichungstag und Bekanntmachung des Hinweises auf die Patenterteilung: **19.04.2006**
(21) Anmeldenummer: 00102551.9
(22) Anmeldetag: 07.02.2000
(51) Int. Cl.: B29C 33/30, B29C 45/44, B29D 31/50

(54) **Spritzgiessform und ihre Verwendung**
Injection mould and its use
Moule à injecter et utilisation de ce moule

(30) Priorität: 08.02.1999 IT MI990240; 02.04.1999 IT MI990700
(43) Veröffentlichungstag der Anmeldung: 09.08.2000
(73) Patentinhaber: Gatti & Piccolo s.r.l., 27029 Vigevano (PV) (IT)
(72) Erfinder: Piccolo, Paolo, 27029 Vigevano (IT)
(74) Vertreter: Hebing, Norbert

(56) Entgegenhaltungen:
- EP-A- 0 860 263
- GB-A- 662 950
- GB-A- 1 197 571
- US-A- 3 016 569
- US-A- 3 390 213

## Beschreibung

Die Erfindung betrifft eine Spritzgießform zum Spritzgießformen von Hohlprodukten oder von mit Hinterschneidungen versehenen Produkten aus einem sich nach dem Entformen ausdehnenden Kunststoff, welche zwei Formteile und einen von diesen umschlossenen, einteiligen Kern aufweisen, wobei die Formteile und der Kern zum Spritzgießen des Kunststoffs einen mit Befüllungskanälen versehenen Raum einschließen, und mit den weiteren Merkmalen des Anspruches 1. Weiterhin betrifft die Erfindung eine bevorzugte Verwendung einer solchen Spritzgießform.

Eine Spritzgießform der vorstehenden Art mit den oben explizit genannten Merkmalen ist in den Figuren 6 und 7 der EP 0 002 311 dargestellt und in der Schrift knapp beschrieben. Diese Spritzgießform dient der Erzeugung eines Hinterschneidungen aufweisenden Faltenbalges. Die Spritzgießform besteht aus zwei Formteilen, welche einen Kern umschließen. In der Schrift wird erläutert, dass sich nach dem Öffnen der Spritzgießform das eingebrachte Material rasch ausdehnt und dadurch von dem Kern freikommt.

Solche expandierenden Kunststoffe, insbesondere EVA (Ethylen/Vinylacetat-Copolymer) werden in jüngster Zeit häufiger für verschiedene Artikel, beispielsweise Schuhsohlen, verwendet. Das EVA-Material ist ein Polymer-Schaumstoff mit geschlossenen Zellen, mit dem sich wasserdichte, nicht toxische, verschiedenartig färbbare Produkte mit guten technischen Eigenschaften erzeugen lassen. Diese Produkte werden meist durch Spritzgießen gebildet. Nach dem Spritzgießen dehnt sich das Material fast unmittelbar beim Öffnen der Spritzgießform um 20% bis 80% aus. Es ist deshalb erforderlich, dass die Produkte rasch entformt werden, damit eine gleichmäßige Ausdehnung der Produkte gewährleistet ist und diese sich nicht durch Berühren von Formteilen verformen können. Das hat dazu geführt, dass die derzeit auf dem Markt befindlichen Produkte aus EVA eine verhältnismäßig einfache Form ohne Hohlräume und Hinterschneidungen aufweisen, beispielsweise Schuhsohlen.

Es sind auch einstückige Schuhwaren aus anderen Kunststoffen wie zum Beispiel Polyurethan, Thermoplaste und PVC bekannt. Solche Schuhwaren weisen jedoch nicht die vorteilhaften Eigenschaften auf, welche sich mit EVA erzielen lassen.

Eine Spritzgießform der eingangs genannten Art kann nicht zur Erzeugung von Hohlprodukten oder mit Hinterschneidungen versehenen Produkten, insbesondere Schuhwaren mit Sohle und Schaft, benutzt werden, weil die Gefahr einer Verformung der Produkte unmittelbar nach dem Entformen durch die Expansion der Produkte besteht. Weiterhin soll eine vorteilhafte Verwendung dieser Spritzgießform gefunden werden.

Gemäß der GB 662,950 ist daher vorgesehen, dass der Kern innerhalb der Form mit einem Ansatz gegen beide Formteile anliegt und dieser Ansatz auf einer Führungssäule bei geöffneter Form aus dem jeweiligen Formteil heraus verschiebbar gehalten ist und dass in einem der Formteile eine gegen das Formteil und den Kern abgestützte Druckfeder angeordnet ist.

Bei einer solchen Spritzgießform genügt es, zum Öffnen ein Formteil von dem anderen abzuheben. Der Kern mit dem dieses umschließenden, durch Spritzgießen erzeugten Produkt gelangt dabei durch die Druckfeder unverzüglich aus wenigstens einem der Formteile.

Um ein rasches Auslösen des Produkts aus beiden Formteilen zu erreichen und um eine kompakte Bauform zu realisieren, sieht die Erfindung vor, dass die Führungssäule mit einem der Formteile fest verbunden ist und durch ein Durchgangsloch des Ansatzes hindurch in eine Bohrung des anderen Formteils führt.

Auf diese Weise wird eine Expansion des Formteils außerhalb der Spritzgießform ohne Gefahr von verformungen aufgrund einer Berührung mit den Formteilen erreicht. Deshalb können durch die Erfindung hochwertige, auch Hohlräume und Hinterschneidungen aufweisende Produkte aus EVA, beispielsweise Schuhe, Taschen oder Mappen, ohne Verformungen hergestellt werden.

Oftmals soll der Schaft von Schuhen Durchgangslöcher aufweisen, um für eine bessere Belüftung des Fußes zu sorgen. Bisher konnten solche Schuhe mit Durchgangslöchern im Schaft nur mit komplexen Spritzgießformen hergestellt werden, welche Stifte mit einem den gewünschten Löchern entsprechenden Durchmesser aufweisen. Diese Stifte müssen vor dem Spritzgießen in die Form eingesetzt und vor dem Entformen des Schuhes der Form wieder entnommen werden. Dies führt jedoch zu unerwünscht hohen Herstellungskosten. Bei Verwendung von schnell schäumenden und nach dem Entformen expandierenden Materialien wären die bekannten Spritzgießformen zum Erzeugen von Schuhen mit Durchgangslöchern unbrauchbar. Schuhe oder andere Produkte mit seitlichen Durchgangslöchern können mit der erfindungsgemäßen Spritzgießform auf einfache, schnelle und preiswerte Art erzeugt werden, wenn gemäß einer vorteilhaften Weiterbildung der Erfindung der Kern von ihm abstehende Nocken aufweist, welche den Hohlraum in den beiden Formteilen überbrücken.

Das Entformen des expandierten Schuhes ist besonders leicht möglich, wenn die maximale radiale Erstreckung der Nocken nicht größer ist als die Innenabmessung des expandierten Produktes.

Die Spritzgießform ist besonders einfach gestaltet, wenn die Nocken in seitliche Ausnehmungen der geschlossenen Spritzgießform einklemmbar ausgebildet sind.

Das zweitgenannte Problem, nämlich die Auffindung einer bevorzugten Verwendung der erfindungsgemäßen Spritzgießform wird erfindungsgemäß dadurch gelöst, dass die Spritzgießform für das Spritzgießen von Hohlprodukten aus EVA-Material benutzt wird.

Die Erfindung lässt verschiedene Ausführungsformen zu. Zur weiteren Verdeutlichung ihres Grundprinzips wird nachfolgend auf die Zeichnung Bezug genommen. Diese zeigt in
- Fig.1: eine Seitenansicht eines mit der erfindungsgemäßen Spritzgießform erzeugten Schuhes,
- Fig.2: einen senkrechten Schnitt durch eine Spritzgießform zur Erzeugung des Schuhes im geschlossenen Zustand,
- Fig.3: einen senkrechten Schnitt durch die Spritzgießform im geöffneten Zustand,
- Fig.4: eine Seitenansicht eines gegenüber Figur 1 abgewandelten, mit der erfindungsgemäßen Spritzgießform erzeugten Schuhes,
- Fig.5: eine perspektivische Ansicht eines vorderen Bereiches einer zweiten Ausführungsform eines Kernes der Spritzgießform,
- Fig.6: einen Querschnitt durch die abgewandelte Spritzgießform,
- Fig.7: einen Querschnitt des Kerns mit dem bereits expandierten Schuh.

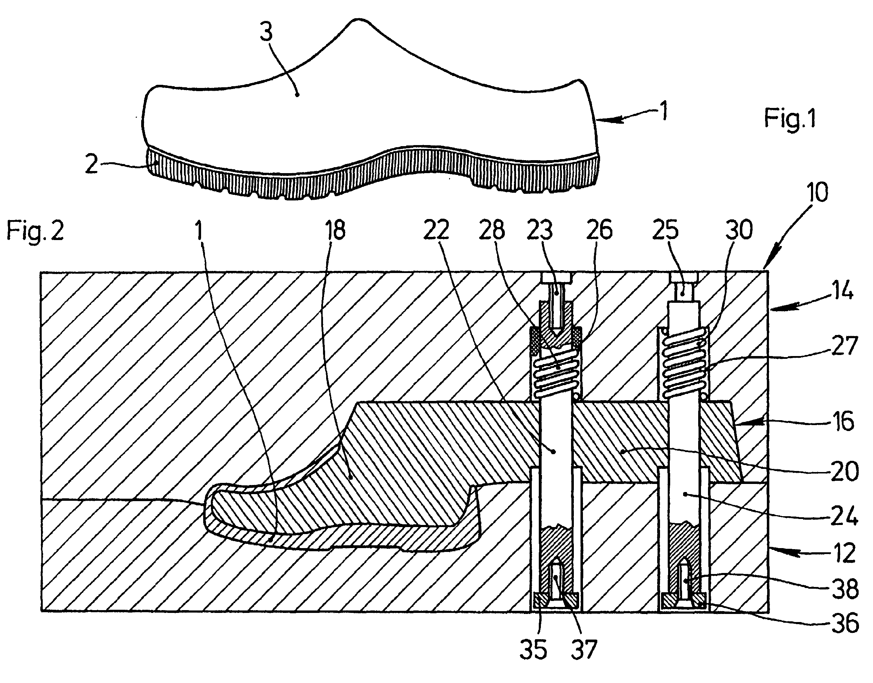

Die Figur 1 zeigt einen Schuh 1, wie man ihn beispielsweise am Strand benutzt, der die Form einer Holzpantine hat und der einstückig aus einer Sohle 2 und einem Schaft 3 gebildet ist.

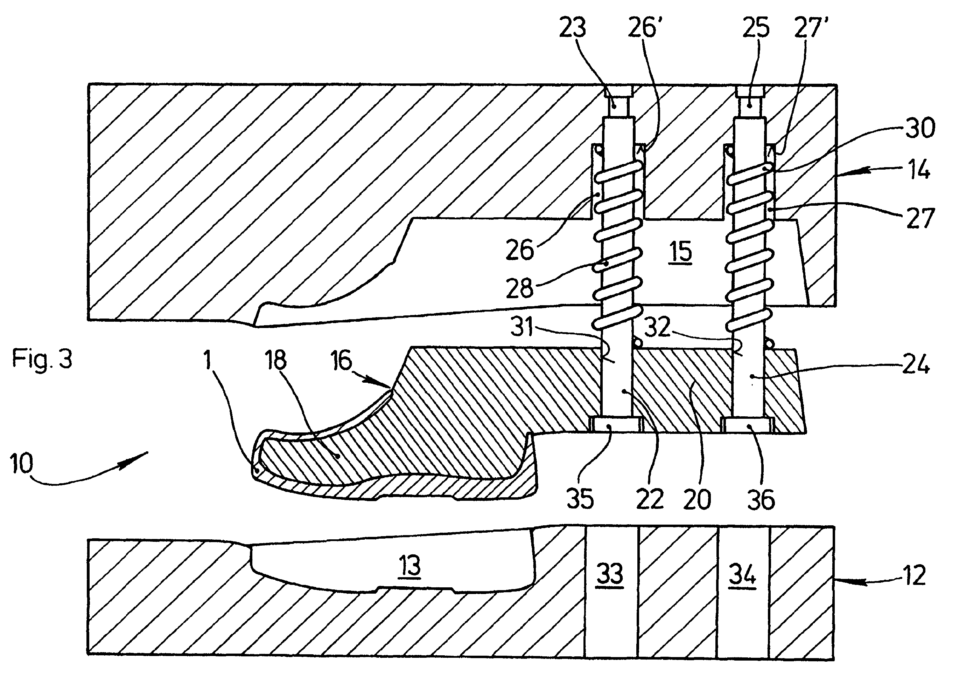

Zum Erzeugen dieses Schuhes 1 dient eine in den Figuren 2 und 3 gezeigte Spritzgießform 10. Diese hat ein unteres Formteil 12, welches am nicht gezeigten unteren Formrahmen einer Presse angebracht werden kann. Am oberen Formrahmen der Presse wird dann ein oberes Formteil 14 der Spritzgießform 10 angebracht. Zwischen den Formteilen 12, 14 befindet sich ein Kernelement 16

Wie die Figur 3 erkennen lässt, hat das untere Formteil 12 einen Hohlraum 13 und das obere Formteil 14 einen Hohlraum 15. Das Kernelement 16 hat einen den Schuh 1 ausfüllenden Kern 18 und einen rückwärtigen Ansatz 20.

Im oberen Formteil 14 sind zwei Führungssäulen 22, 24 in senkrechter Ausrichtung in einer Aufnahme 26, 27 des oberen Formteils 14 mittels Schrauben 23, 25 befestigt. Koaxial zu jedem der Führungssäulen 22, 24 ist jeweils eine Druckfeder 28, 30 angeordnet, die sich jeweils einerseits an einer Schulter 26' bzw. 27' des Formteils 14, andererseits auf der Oberseite des Ansatzes 20 des Kernelementes 16 abstützt. Die Führungssäulen 22, 24 führen durch Durchgangslöcher 31, 32 des Ansatzes 20 hindurch und greifen im geschlossenen Zustand der Spritzgießform 10 jeweils in eine Bohrung 33, 34 des unteren Formteils 12 ein. Dort enden sie jeweils mit einem Endanschlag 35, 36, der auf der unteren Stirnseite der jeweiligen Führungssäule 22, 24 durch jeweils eine Schraube 37, 38 befestigt ist.

In der in Figur 1 dargestellten Schließstellung drückt die Presse das obere Formteil 14 gegen den Ansatz 20 und dadurch auch den Ansatz 20 gegen das untere Formteil 12, wobei die Druckfedern 28, 30 zusammengedrückt sind. Der Hohlraum 13 des unteren Formteils 12 sowie teilweise der obere Hohlraum 15 und der Kern 18 bilden einen Raum, der der Aufnahme des unter Druck eingespritzten, den Schuh 1 bildenden Kunststoffs dient, der also den eigentlichen Formraum bildet. In der Zeichnung sind die erforderlichen Spritzgießkanäle zum Zuführen des Materials in die Spritzgießform 10 nicht gezeigt, da sie von üblicher Gestaltung sind.

Nachdem die Spritzgießphase beendet ist, wird der obere, nicht dargestellte Formrahmen mit dem oberen Formteil 14 rasch von dem unteren Formteil 12 abgehoben. Dabei bewegen sich zugleich die Führungssäulen 22, 24 aus den Bohrungen 33, 34 nach oben. Gleichzeitig drücken die Druckfedern 28, 30 das Kernelement 16 nach unten. Dadurch gelangt das Kernelement 16 aus dem Hohlraum 15. Bei weiterem Anheben des Formteils 14 gelangen die Endanschläge 35, 36 von unten her gegen den Ansatz 20 des Kernelementes 16 und heben dieses aus dem Hohlraum 13 des unteren Formteils 12. Durch diese kombinierten Wirkungen gelangen die Teile rasch von der in Figur 1 gezeigten Position in die in Figur 2 dargestellte Position. Dadurch kann der Schuh 1 sich frei ausdehnen und anschließend leicht vom Kern 18 entfernt werden.

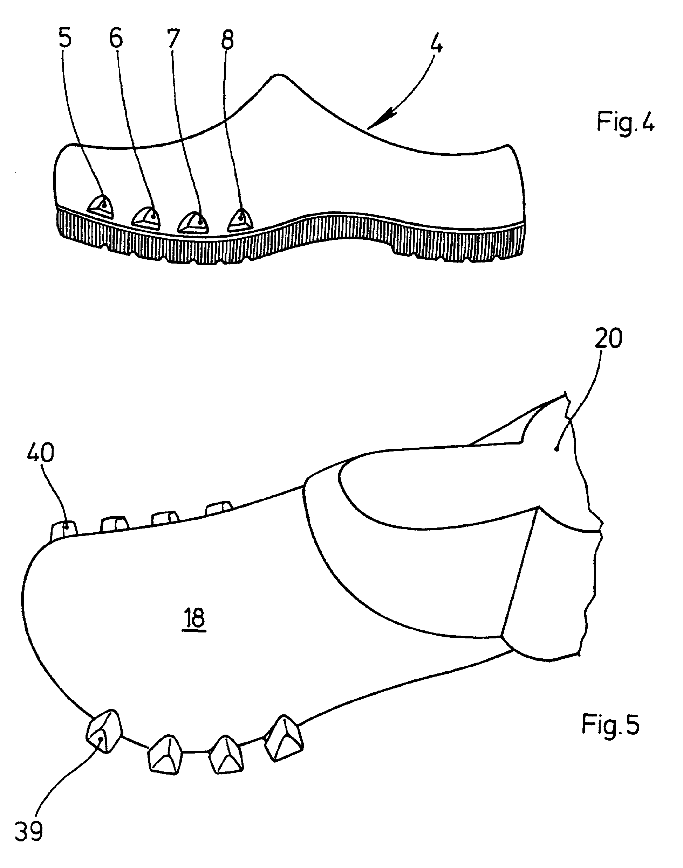

Die Figur 4 zeigt einen Schuh 4, welcher seitlich im vorderen Bereich seines Schaftes Durchgangslöcher 5, 6, 7, 8 hat.

Die Figur 5 lässt erkennen, dass bei der zweiten Ausführungsform der Kern 18 seitliche Nocken 39, 40 hat, welche der Position der Durchgangslöcher 5, 6, 7, 8 entsprechen.

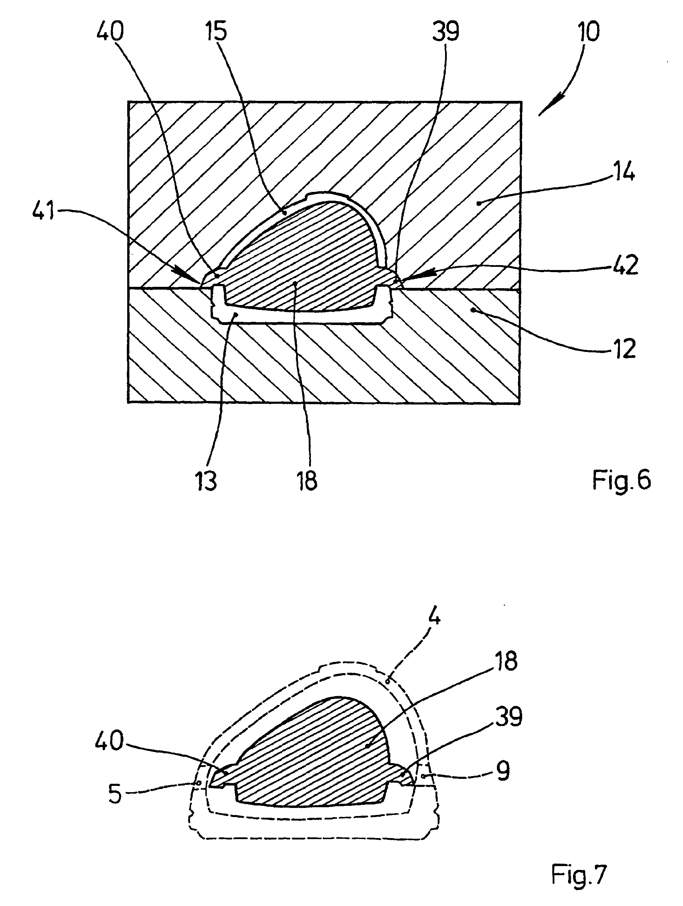

Die Figur 6 zeigt wiederum das untere Formteil 12 und das obere Formteil 14 der Spritzgießform 10. Diese sind bei dieser Ausführungsform so gestaltet, dass die Nocken 39, 40 zwischen dem oberen Formteil 14 und dem unteren Formteil 12 in Ausnehmungen 41, 42 eingeklemmt werden können.

Die Figur 7 zeigt gestrichelt den Schuh 4 auf dem Kern 18 nach dem Expandieren des Schuhes 4. Man erkennt, dass der Schuh 4 durch die Expansion um so viel größer als der Kern 18 wurde, dass die Nocken 39, 40 nicht mehr in die Durchgangslöcher 5, 9 eingreifen, so dass der Schuh leicht vom Kern 18 entfernt werden kann.

## Patentansprüche

1. Spritzgießform, zum Spritzgießformen von Hohlprodukten (1) oder von mit Hinterschneidungen versehenen Produkten aus einem sich nach dem Entformen ausdehnenden Kunststoff, welche zwei Formteile (12, 14) und einen von diesen umschlossenen, einteiligen Kern (18) aufweisen, wobei die Formteile (12, 14) und der Kern (18) zum Spritzgießen des Kunststoffs einen mit Befüllungskanälen versehenen Raum einschließen, wobei der Kern (18) innerhalb der Form mit einem Ansatz (20) gegen beide Formteile (12, 14) anliegt und dieser Ansatz (20) auf einer Führungssäule (22, 24) bei geöffneter Form aus dem jeweiligen Formteil 12, 14) heraus verschiebbar gehalten ist und wobei in einem der Formteile (12 , 14) eine gegen das Formteil (12 oder 14) und den Kern (18) abgestützte Druckfeder (28, 30) angeordnet ist, **dadurch gekennzeichnet, dass** die Führungssäule (22, 24) mit einem der Formteil (12, 14) fest verbunden ist und durch ein Durchgangsloch (31, 32) des Ansatzes (20) hindurch in eine Bohrung (33, 34) des anderen Formteils (12, 14) führt.

2. Spritzgießform nach Anspruch 1, **dadurch gekennzeichnet, dass** die Druckfeder (28, 30) koaxial zu der Führungssäule (22, 24) angeordnet ist.

3. Spritzgießform nach den Ansprüchen 1 oder 2, **dadurch gekennzeichnet, dass** am freien Ende der Führungssäule (22, 24) ein den maximal möglichen Hub des Kernes (18) begrenzender, mit der Führungssäule (22, 24) in die Bohrung (33, 34) des dem freien Ende der Führungssäule (22, 24) zugewandten Formteils (12) eintauchender Endanschlag (35, 36) angeordnet ist.

4. Spritzgießform nach zumindest einem der vorangehenden Ansprüche, **dadurch gekennzeichnet, dass** die Formteile (12, 14) jeweils zwei durch den Ansatz (20) führende Führungssäulen (22, 24) mit jeweils einer Druckfeder (27, 28) aufweisen.

5. Spritzgießform nach zumindest einem der vorangehenden Ansprüche, **dadurch gekennzeichnet, dass** der Kern (18) von ihm abstehende Nocken (39, 40) aufweist, welche den Hohlraum (13, 15) in den beiden Formteilen (12, 14) überbrücken.

6. Spritzgießform nach Anspruch 5, **dadurch gekennzeichnet, dass** die maximale radiale Erstreckung der Nocken (39, 40) nicht größer ist als die Innenabmessung des expandierten Produktes.

7. Spritzgießform nach Anspruch 5, **dadurch gekennzeichnet, dass** die Nocken (39, 40) in seitliche Ausnehmungen (41, 42) der geschlossenen Spritzgießform (10) einklemmbar ausgebildet sind.

8. Verwendung der Spritzgießform nach zumindest einem der vorangehenden Ansprüche für das Spritzgießen von Hohlprodukten aus EVA-Material.

## Claims

1. An injection mould for injection-moulding hollow products (1) or products provided with undercuts from a plastic material that expands after the removal from the mould, wherein said injection mould comprises two mould parts (12, 14) and a one-piece core (18) surrounded by these mould parts, wherein the mould parts (12, 14) and the core (18) enclose a space provided with filling channels for the injection-moulding of the plastic material, wherein the core (18) abuts both mould parts (12, 14) within the mould with a projection (20) and this projection (20) is held on a guide column (22, 24) such that it can be displaced out of the respective mould part (12, 14) when the mould is open, and wherein a pressure spring (28, 30) is arranged in one of the mould parts (12, 14) and braced against the mould part (12 or 14) and the core (18), **characterized in that** the guide column (22, 24) is rigidly connected to one of the mould parts (12, 14) and extends into a bore (33, 34) of the other mould part (12, 14) through a through-hole (31, 32) of the projection (20).

2. The injection mould according to Claim 1, **characterized in that** the pressure spring (28, 30) is arranged coaxial to the guide column (22, 24).

3. The injection mould according to Claim 1 or 2, **characterized in that** an end stop (35, 36) for restricting the maximum possible travel of the core (18) is arranged on the free end of the guide column (22, 24) and extends into the core (33, 34) of the mould part (12) facing the free end of the guide column (22, 24) together with the guide column (22, 24).

4. The injection mould according to at least one of the preceding claims, **characterized in that** the mould parts (12, 14) respectively comprise two guide columns (22, 24) that extend through the projection (20) and are respectively provided with a pressure spring (27, 28).

5. The injection mould according to at least one of the preceding claims, **characterized in that** the core (18) comprises cams (39, 40) that protrude from the core and bridge the hollow space (13, 15) in the two mould parts (12, 14).

6. The injection mould according to Claim 5, **characterized in that** the maximum radial dimension of the cams (39, 40) does not exceed the inside dimension of the expanded product.

7. The injection mould according to Claim 5, **characterized in that** the cams (39, 40) are realized such that they can be clamped into lateral recesses (41, 42) of the closed injection mould (10).

8. The utilization of the injection mould according to at least one of the preceding claims for injection-moulding hollow products of EVA-material.

## Revendications

1. Moule d'injection pour moulage par injection de produits creux (1) ou de produits pourvus de contre-dépouilles en matière plastique s'étirant après le démoulage et qui comportent deux parties de moule (12, 14) et un noyau en une pièce (18) entouré par celles-ci, les parties de moule (12, 14) et le noyau (18) pour le moulage par injection de la matière plastique circonscrivant un espace équipé de canaux de remplissage, le noyau (18) étant à l'intérieur du moule en contact par une pièce ajoutée (20) avec les deux parties de moule (12, 14) et cette pièce ajoutée (20) étant maintenue sur une colonne de guidage (22, 24), de manière à pouvoir être sortie, le moule étant ouvert, de la partie de moule respective (12, 14) et un ressort de compression (28, 30) s'appuyant contre la partie de moule (12 ou 14) et le noyau (18) étant disposé dans une des parties de moule (12, 14), **caractérisé en ce que** la colonne de guidage (22, 24) est reliée fixement à une des pièces de moule (12, 14) et mène par un trou de passage (31, 32) de la pièce ajoutée (20) vers un alésage (33, 34) de l'autre partie de moule (12, 14).

2. Moule d'injection selon la revendication 1, **caractérisé en ce que** le ressort de compression (28, 30) est disposé coaxialement par rapport à la colonne de guidage (22, 24).

3. Moule d'injection selon les revendications 1 ou 2, **caractérisé en ce qu'**à l'extrémité libre de la colonne de guidage (22, 24), une butée terminale (35, 36) limitant la course maximale possible du noyau (18) et plongeant avec la colonne de guidage (22, 24) dans l'alésage (33, 34) de la partie de moule (12) tournée vers l'extrémité libre de la colonne de guidage (22, 24) est disposée.

4. Moule d'injection selon au moins une des revendications précédentes, **caractérisé en ce que** les parties de moule (12, 14) présentent respectivement deux colonnes de guidage (22, 24) traversant la pièce ajoutée (20) et comportant respectivement un ressort de compression (27, 28).

5. Moule d'injection selon au moins une des revendications précédentes, **caractérisé en ce que** le noyau (18) présente des cames proéminentes (39, 40) qui surplombent la cavité (13, 15) des deux pièces de moule (12, 14).

6. Moule d'injection selon la revendication 5, **caractérisé en ce que** l'extension radiale maximale des cames (39, 40) n'est pas supérieure aux dimensions intérieures du produit expansé.

7. Moule d'injection selon la revendication 5, **caractérisé en ce que** les cames (39, 40) sont réalisées de manière à pouvoir être enclenchées dans des évidements latéraux (41, 42) du moule d'injection fermé (10).

8. Moule d'injection selon au moins une des revendications précédentes pour le moulage par injection de produits creux en matière EVA.
